# EUROPÄISCHE PATENTSCHRIFT

(11) **EP 0 607 397 B1**
(45) Veröffentlichungstag und Bekanntmachung des Hinweises auf die Patenterteilung: **26.03.1997**
(21) Anmeldenummer: 93917644.2
(22) Anmeldetag: 23.07.1993
(51) Int. Cl.: E06C 9/02, F16B 7/04

(54) **BÜGEL ZUM BEFESTIGEN VON SCHIENENARTIGEN BAUELEMENTEN AUF WINKELPROFILEN MITTELS VORHANDENER STEIGBOLZEN**
CLAMP FOR SECURING RAIL-LIKE CONSTRUCTION ELEMENTS TO L-BARS BY MEANS OF EXISTING INCLINED BOLTS
ETRIER SERVANT A FIXER DES ELEMENTS DE CONSTRUCTION EN FORME DE RAIL SUR DES CORNIERES AU MOYEN DE BOULONS DE MONTEE EXISTANTS

(30) Priorität: 31.07.1992 DE 9210295 U
(43) Veröffentlichungstag der Anmeldung: 27.07.1994
(73) Patentinhaber: SÖLL GMBH, D-95028 Hof (DE)
(72) Erfinder: GRAF, Jürgen, D-95032 Hof (DE); STOYAN, Detlef, D-95233 Helmbrechts (DE); MÜLLER, Markus, D-95183 Zedtwitz (DE)
(74) Vertreter: Abitz, Walter, Dr.-Ing.
(86) Internationale Anmeldenummer: EP9301976
(87) Internationale Veröffentlichungsnummer: WO9403694

(56) Entgegenhaltungen:
- EP-A- 0 290 034
- DE-B- 1 019 456
- US-A- 2 957 538
- US-A- 4 932 497

## Beschreibung

Die Erfindung betrifft einen Bügel zum Befestigen von schienenartigen Bauelementen, z.B. einer Einholm- oder Mittelholmleiter, mittels vorhandener Steigbolzen auf Winkelprofilen oder Winkelstählen.

Gittermaste von Fernleitungstrassen oder Funktürmen weisen entweder Leitern oder Steigbolzen auf, um ein Besteigen zu ermöglichen. Die Steigbolzen stehen von einem eine Kante des Gittermasten bildenden Winkelprofil abwechselnd von dem einen Winkelschenkel und von dem anderen Winkelschenkel des Winkelprofils ab, so daß aufeinanderfolgende Steigbolzen unter einem Winkel von 90° stehen. Bei den Steigbolzen handelt es sich um Gewindebolzen, die z.B. 20 cm nach außen abstehen und dadurch als Tritte dienen können. Bisher bestand keine praktikable Möglichkeit, derartige Steigwegen mit Absturzsicherungen zu versehen, wie sie aus der DE-PS-1 961 757 und der EP-A-0 129 241 bekannt sind. Diese Steigschutzvorrichtungen bestehen aus einer Schiene von C-förmigem Profil, in der eine Fangvorrichtung geführt ist, die eine Sperrklinke aufweist, die im Falle eines Absturzes gegen Anschläge innerhalb der C-Profil-Schiene läuft und dadurch einen Absturz verhindert.

Der Erfindung liegt die Aufgabe zugrunde, eine Möglichkeit zur Verwendung derartiger Steigschutzvorrichtungen bei Steigwegen zu schaffen, die durch Steigbolzen an Winkelprofilen gebildet werden.

Erfindungsgemäß wird diese Aufgabe durch einen Befestigungsbügel gemäß Anspruch 1 gelöst. Es wird ein Befestigungsbugel vorgeschlagen, der einen flachen Hauptteil aufweist, der an seinem einen Ende eine Bohrung hat, mittels der der Bügel durch den Steigbolzen an dem Winkelprofil befestigbar ist, und im Abstand von dessem anderen Ende eine Abstützlasche absteht, die die Winkelspitze des Winkelprofils umgreift und von dessem vorderen Ende nach der anderen Seite hin und etwas zurückgebogen eine Befestigungslasche für die Steigschutzvorrichtung absteht.

Durch den erfindungsgemäßen Befestigungsbügel wird eine besonders einfache nachträgliche Montage einer Steigschutzvorrichtung ermöglicht, da die bereits vorhandenen Steigbolzen dazu verwendet werden, den Befestigungsbügel an dem Winkelprofil zu befestigen.

Vorzugsweise ist der Befestigungsbügel so ausgebildet, daß die Befestigungslasche rechtwinklig zur Winkelhalbierenden des Winkelprofils liegt, so daß die Lage des Befestigungspunktes für die Steigschutzvorrichtung unabhängig davon ist, an welchem Winkelschenkel des Winkelprofils der Bügel befestigt ist. Anders ausgedrückt: Die Befestigungslasche ist unter einem Winkel von 45° zurückgebogen und die Achse der Bohrung trifft genau auf die Kante des Winkelprofils.

Ein Ausführungsbeispiel der Erfindung wird nachfolgend anhand der Zeichnung erläutert: Es zeigen
- Fig. 1: in einer perspektivischen Darstellung die Befestigungslasche von der Seite, auf der sich der Steigbolzen befindet und
- Fig. 2: den Befestigungsbügel von Fig. 1 von der entgegengesetzten Seite.

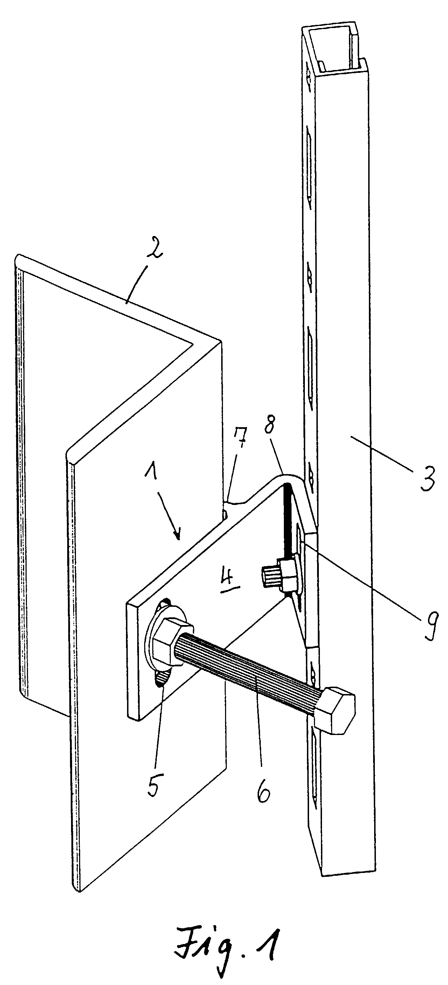

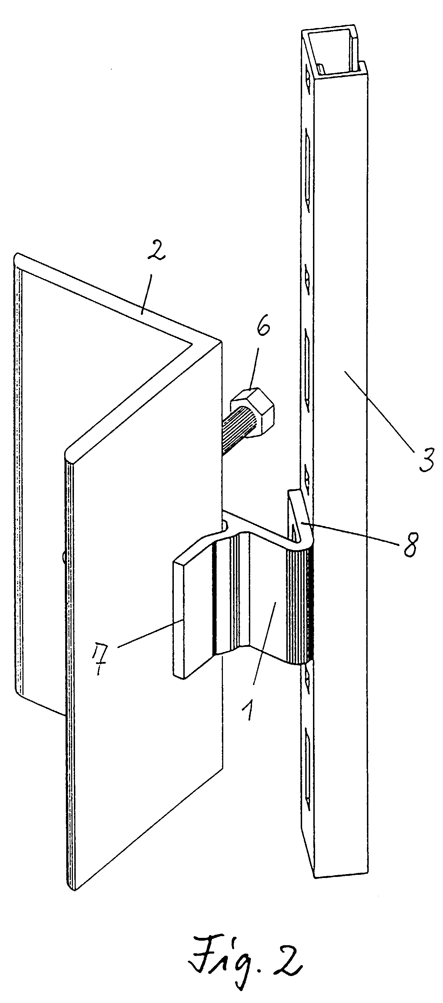

Die Figuren 1 und 2 zeigen einen Befestigungsbügel 1 zum Befestigen einer Steigschutzvorrichtung an einem Winkelstahl oder Winkelprofil 2 z.B. eines Gittermasten oder sonstigen Bauwerkes. Die Steigschutzvorrichtung kann von der aus der DE-PS-1 961 757 und der EP-A-0 129 241 bekannten Bauart sein und von ihr ist in den Figuren nur die Laufschiene 3 für die Fangeinrichtung dargestellt.

Der Befestigungsbügel 1 besteht aus einem flachen Hauptteil 4, der an seinem hinteren Ende ein Langloch 5 aufweist, durch das ein Steigbolzen 6 gesteckt ist, der den Befestigungsbügel 1 an dem Winkelprofil 2 festspannt. Im Abstand von dem vorderen Ende des Hauptteils 4 ist eine senkrecht abstehende Abstützlasche 7 angeschweißt, die die rechtwinklige Kante des Winkelprofils 2 umgreift. Am vorderen Ende ist der Befestigungsbügel 1 zu einer Befestigungslasche 8 zurückgebogen, wobei die Abstützlasche 7 und die Befestigungslasche 8 auf entgegengesetzten Seiten des Hauptteils 4 liegen. Zweckmäßig bildet die Befestigungslasche 8 mit dem Hauptteil 4 einen Winkel von 45°. In der Befestigungslasche 8 ist ein Langloch 9 zur Befestigung der Laufschiene 3 vorgesehen. Die Achse des Langloches 9 trifft in ihrer Verlängerung genau die Kante des Winkelprofils 2 und fällt mit der Winkelhalbierenden des Winkelprofils 2 zusammen, so daß die Lage des Langlochs 9 unabhängig davon ist, auf welcher Seite des Winkelprofils der Befestigungsbügel 1 durch den Steigbolzen 6 festgespannt ist. Üblicherweise sind die Steigbolzen 6 abwechselnd an dem einen Winkelschenkel und an dem anderen Winkelschenkel des Winkelprofils 2 befestigt und es ist daher zweckmäßig, den Befestigungsbügel 1 so auszubilden, daß die Position des Langlochs 9 unabhängig davon ist, an welchem Winkelschenkel der Befestigungsbügel 1 festgespannt ist. Durch die abwechselnde Befestigung an dem einen und dem anderen Winkelschenkel ergibt sich insgesamt eine besonders stabile Anordnung der Laufschiene 3.

Dadurch daß die Verbindung des Befestigungsbügels mit dem Winkelprofil einerseits und mit der Laufschiene 3 andererseits durch Langlöcher 5, 9 erfolgt, ist die Lage der Befestigungspunkte ausreichend variabel um die vorhandenen Unterschiede im Abstandsraster der Steigbolzen und der Öffnungen auf der Rückseite der Laufschiene 3 ausgleichen zu können. Durch die Formgebung des Befestigungsbügels 1 wird außerdem ein definierter Abstand der Laufschiene 3 zur Spitze des Winkelprofils 2 erreicht.

## Patentansprüche

1. Bügel zum Befestigen von schienenartigen Bauelementen (3) auf Winkelprofilen (2) mittels Steigbolzen (6), wobei der Befestigungsbügel (1) einen flachen Hauptteil (4) aufweist, der an seinem einen Ende eine Bohrung (5) hat und von dem nach der einen Seite eine Abstützlasche (7) absteht, wobei das andere Ende des Hauptteils (4) nach der anderen Seite etwas zurückgebogen ist, wodurch eine Befestigungslasche (8) gebildet wird.

2. Befestigungsbügel nach Anspruch 1, dadurch gekennzeichnet, daß die Befestigungslasche (8) unter einem Winkel von 45° zurückgebogen ist und daß sich in der Befestigungslasche eine Bohrung (9) befindet, deren Achse die Ansatzlinie schneidet, an der die Abstützlasche (7) von dem Hauptteil (4) absteht.

3. Befestigungsbügel nach Anspruch 2, dadurch gekennzeichnet, daß die Bohrung in der Befestigungslasche (8) ein Langloch (9) ist.

## Claims

1. Strap for fixing rail-like construction elements (3) onto angle profiles (2) by means of climbing bolts (6), wherein the fixing strap (1) has a flat main section (4) which has a bore (5) at one end and from which a supporting plate (7) projects to one side, the other end of the main section (4) being somewhat bent back to the other side, thereby forming a fixing plate (8).

2. Fixing strap according to claim 1, characterized in that the fixing plate (8) is bent back at an angle of 45° and in that there is located in the fixing plate a bore (9) the axis of which intersects the line at which the supporting plate (7) projects from the main section (4).

3. Fixing strap according to claim 2, characterized in that the bore in the fixing plate (8) is an elongated hole (9).

## Revendications

1. Étrier de fixation d'éléments structurels en forme de rail (3) sur des profilés en cornière (2) au moyen de barreaux d'ascension (6), dans lequel l'étrier de fixation (1) comprend une partie principale (4) plane qui présente à une première extrémité un trou (5) et à partir de laquelle une patte d'appui (7) fait saillie sur un côté, tandis que l'autre extrémité de la partie principale (4) est dans une certaine mesure repliée sur l'autre côté, en formant une patte de fixation (8).

2. Étrier de fixation selon la revendication 1, caractérisé en ce que la patte de fixation (8) est repliée en faisant un angle de 45° et en ce qu'il est prévu, disposé dans la patte de fixation, un trou (9) dont l'axe recoupe la ligne de raccordement à l'endroit de laquelle la patte d'appui (7) fait saillie vis-à-vis de la partie principale (4).

3. Étrier de fixation selon la revendication 2, caractérisé en ce que le trou situé dans la patte de fixation (8) est un trou allongé (9).
